# EUROPÄISCHE PATENTSCHRIFT

(11) **EP 3 528 644 B1**
(45) Veröffentlichungstag und Bekanntmachung des Hinweises auf die Patenterteilung: **27.05.2020**
(21) Anmeldenummer: 17793866.9
(22) Anmeldetag: 17.10.2017
(51) Int. Cl.: A23L 3/36, A21D 15/02, A21D 15/08

(54) **VERFAHREN ZUM KONDITIONIEREN EINES LEBENSMITTELS**
METHOD FOR CONDITIONING A FOOD
PROCÉDÉ DE CONDITIONNEMENT D'UN PRODUIT ALIMENTAIRE

(30) Priorität: 18.10.2016 DE 102016119795
(43) Veröffentlichungstag der Anmeldung: 28.08.2019
(73) Patentinhaber: Reichenbach, Albert, 58640 Iserlohn (DE); Loesche, Klaus, Bremerhaven 27580 (DE)
(72) Erfinder: REICHENBACH, Albert, 58640 Iserlohn (DE)
(74) Vertreter: Haverkamp, Jens
(86) Internationale Anmeldenummer: PCT/EP2017/076489
(87) Internationale Veröffentlichungsnummer: WO 2018/073257

(56) Entgegenhaltungen:
- DE-A1- 2 902 270
- DE-B3-102015 115 324
- JP-B2- 3 647 591
- US-A1- 2004 066 835
- US-A1- 2007 166 444
- US-A1- 2009 260 780

## Beschreibung

Die Erfindung betrifft ein Verfahren zum Konditionieren eines Lebensmittels im Zusammenhang mit einer Bearbeitung, einer Verarbeitung oder seiner Herstellung in einer Luftumgebung in einem offenen Konditionierungsraum, durch den die Lebensmittel gefördert werden.

Backwaren, wie beispielsweise Brote, Brötchen und dergleichen müssen, nachdem sie aus dem für das Backen vorgesehenen Ofen entnommen werden, auskühlen, bevor diese einer weiteren Bearbeitung zugeführt werden. Bei einer solchen nachfolgenden Bearbeitung kann es sich beispielsweise um das Schneiden von Brot oder das Verpacken der ausgekühlten Backwaren oder auch das Einfrieren derselben handeln. Bei dem Prozess des Herstellens von Backwaren ist der sich an das eigentliche Backen anschließende Auskühlprozess nicht unkritisch, vor allem, da dieser Temperaturbereiche durchläuft, in denen eine Rekontamination der Backwaren möglich ist. Unter einer Rekontamination sind diejenigen Prozesse zu verstehen, durch die eine solche Backware während der Auskühlung der Umgebungsluft ausgesetzt ist und sich in der Umgebungsluft befindliche mikrobielle Keime auf der Oberfläche des auskühlenden Backlings absetzen können. Die Auskühlgeschwindigkeit von aus einem Ofen entnommenen Backwaren ist abhängig von der Beschaffenheit der Backware, wobei ein Auskühlen von Backwaren mit großer Masse und einem relativ hohen spezifischen Gewicht bei Raumtemperatur entsprechend länger dauert. Bei Vollkornbrot ist bei einer Auskühlung in Raumtemperatur von einer Kerntemperatur von etwa 90°C auf eine Schneidtemperatur mit einer Kerntemperatur von etwa 24°C mit einer Auskühlzeit von etwa 8 Stunden und mehr zu rechnen. Bei großen Brotgewichten kann die Kühldauer 12 - 24 Stunden oder länger betragen.

Um bei einem Auskühlen der aus einem Ofen entnommenen Backwaren keinen zu großen Feuchtigkeitsverlust hinnehmen zu müssen, werden im Zusammenhang mit einem Einsatz von Kälteanlagen zur Beschleunigung eines Abkühlens der Backwaren Befeuchter eingesetzt. Eingesetzt werden zu diesem Zweck Dampfgeneratoren. Eine Luftbefeuchtung während der Auskühlphase durch Dampf vermag zwar einem zu hohen Feuchtigkeitsverlust in der Backware entgegenzuwirken. Jedoch ist darauf zu achten, dass sich keine Kondensate bilden, die die Backware sowohl physikalisch als auch hygienisch nachteilig beeinflussen können.

Das Auftauen von tiefgekühlten Lebensmitteln, insbesondere in einem Lebensmittel verarbeitenden Betrieb ist nicht unproblematisch, wenn die Struktur, das optische Erscheinungsbild und der Geschmack des gefrorenen Lebensmittels erhalten bleiben sollen. Das Beibehalten einer veränderten Struktur des tiefgekühlten Lebensmittels nach dem Auftauen setzt ein bestimmungsgemäßes Gefrieren voraus. Maßgeblichen Einfluss auf eine Beibehaltung der ursprünglichen Lebensmittelstruktur beim Gefrieren hat die Gefrierrate und dementsprechend die Gefrierzeit. Diese hängt unter anderem von der Umgebungstemperatur ab. In aller Regel ist die Qualität des Lebensmittels nach dem Auftauen besser, wenn dieses in kurzer Zeit von der Umgebungstemperatur auf die Tiefkühltemperatur gebracht worden ist. Dieses ist in aller Regel vor allem bei einem Lebensmittel verarbeitenden Betrieb ohne weiteres zu gewährleisten.

Problematischer ist hingegen das Auftauen eines tiefgefrorenen Lebensmittels, da in der Regel dieser Prozess nicht mit der Geschwindigkeit durchgeführt werden kann, die für das Einfrieren möglich ist. Schließlich soll das aufzutauende Lebensmittel, welches naturgemäß von außen nach innen auftaut, nicht durch eine zu hohe Temperaturzufuhr bereits außenseitig ganz oder teilweise gegart werden. Aufgetaut werden gefrorene Lebensmittel daher in einer Umgebung, die mitunter nur wenige Grad über Null beträgt. Dieses bedingt allerdings relativ lange Auftauzeiten. Nicht unproblematisch bei langen Auftauzeiten ist jedoch, dass diese Lebensmittel dann relativ lange während des Auftauprozesses mehr oder weniger unkontrolliert der Umgebung ausgesetzt sind und daher mikrobiell - etwa bakteriell oder fungal - kontaminiert werden können. Dieses ist bereits bei Temperaturen ab -8 °C bis -10 °C möglich.

Auch im Zusammenhang mit der Herstellung eines Lebensmittels haben Umgebungsbedingungen wie Temperatur und Druckeinfluss auf die spätere Qualität des Lebensmittels. Dieses ist beispielsweise beim Gären von Teig zum Herstellen von Backwaren der Fall. Eine Temperaturerhöhung während des Gärens lässt den Gärprozess schneller ablaufen, was mitunter nicht gewünscht ist. Aus diesem Grunde muss dann der Teig gekühlt werden. Kühlen birgt hingegen die Gefahr einer Entstehung von Kondensat, was vor allem in Bezug auf eine Kontaminationsgefahr ungewünscht ist.

Aus DE 20 2010 015 609 U1 ist ein Rotationsgrillgerät mit integriertem Sensorsystem bekannt. Bei diesem vorbekannten Grillgerät stellt die Garkammer den Konditionierungsraum dar. Dieser ist geschlossen. Mittels eines Umwälzlüfters wird in der Garkammer eine umwälzende Luftströmung erzeugt. Ein elektrisch- oder gasbeheizter Wärmetauscher stellt die notwendige Temperatur bereit, die von dem erzeugten Luftstrom von dem Wärmetauscher zu dem in dem Grillraum befindlichen Grillgut transportiert wird. Von Besonderheit ist bei diesem vorbekannten Rotationsgrillgerät, dass die Luftströmung das auf Spießen befindliche Grillgut nicht nur von außen, sondern auch über entsprechende luftführende Kanäle von innen anströmt. Zwar offenbart dieser Stand der Technik eine Erfassung der Feuchte und der Strömungsgeschwindigkeit innerhalb der Garkammer. Eine Regelung bezüglich dieser Größen ist nicht vorgesehen.

JP 3 647 591 B2 offenbart eine Vorrichtung zum Auftauen tiefgefrorener Lebensmittel in einer Auftaukammer. Der Auftauraum ist ein geschlossener Raum. Der darin geförderte Luftstrom wird umgewälzt. Bei diesem Stand der Technik werden klimatische Daten erfasst, jedoch nicht in der Umgebung des Lebensmittels, sondern in einem Raum außerhalb des als Auftauraum anzusprechenden Konditionierungsraumes.

US 2007/166444 A1 offenbart ein Verfahren zum Kühlen von Brot. Bei diesem Verfahren erfolgt eine Befeuchtung des Brotes durch Besprühen desselben oder Bestreichung desselben mit einem Pinsel. Bei diesem Stand der Technik wird während des Kühlvorganges in der Kühlkammer mithilfe von Sensoren die Temperatur, die Feuchtigkeit und der Druck erfasst.

US 2004/066835 A1 offenbart ein Verfahren zum Auftauen von Fisch oder Fleisch durch Erzeugen von Wasserdampf und Beheizen des Auftauraumes. Die Temperatur und die Feuchtigkeit werden erfasst und durch Vergleich mit Sollwerten wird die Temperatur und die Feuchtigkeit in dem Auftauraum geregelt. Bei dem Auftauraum handelt es sich um einen geschlossenen Raum, durch den die Luftströmung im Umluftbetrieb betrieben wird.

US 2009/260780 A1 offenbart einen Kühltunnel zum Abkühlen von gebackenem Brot. Auch bei diesem Stand der Technik wird die Temperatur und der Feuchtigkeitsgehalt im Kühlraum erfasst und durch Betätigung eines Ventilators oder einer Befeuchtungsanlage kontrolliert.

Auch DE 29 02 270 A1 betrifft ein Verfahren zum Abkühlen von Backgut. Dieses vorbekannte Verfahren arbeitet chargenweise unter Benutzung einer geschlossenen Kühlkammer.

Die vorstehenden Ausführungen verdeutlichen, dass bei unterschiedlichen herstellungsbedingten Temperaturänderungen eine Konditionierung von Lebensmitteln sinnvoll und erforderlich ist, damit die Qualität eines Lebensmittels in Folge der Temperaturänderung soweit wie möglich erhalten bleibt. Eine besondere Schwierigkeit ist hierbei das Konditionieren der Lebensmittel in einem nicht hermetisch abgeschlossenen Konditionierungsraum.

Ausgehend von dem diskutierten Stand der Technik liegt der Erfindung daher die Aufgabe zugrunde, ein Verfahren zum Konditionieren eines Lebensmittels im Zusammenhang mit einem herstellungsbedingten Prozessschritt eine Temperaturänderung in einer Luftumgebung vorzuschlagen, mit dem eine Konditionierung nicht nur wirkungsvoll und mit geringem Energieeinsatz möglich ist, sondern mit dem eine Konditionierung von Lebensmitteln in einem offenen Konditionierungsraum bei einer Durchlaufkühlung eingesetzt werden kann.

Gelöst wird diese Aufgabe erfindungsgemäß durch ein eingangs genanntes, gattungsgemäßes Verfahren mit den Merkmalen des Anspruchs 1.

Bei diesem Konditionierungsverfahren werden zur Konditionierung des Lebensmittels innerhalb des offenen Konditionierungsraumes verschiedene klimatische Konditionierungsgrößen erfasst. Erfasst werden die Temperatur, der absolute Wassergehalt und der Luftdruck innerhalb des Konditionierungsraumes, vorzugsweise in der Nähe zu den zu konditionierenden Lebensmitteln. Wenn gewünscht, können weitere Konditionierungsgrößen erfasst werden, wie beispielsweise Luftbewegungen, ausgelöst etwa durch Zugluft, Konvektion oder dergleichen. Zu den Lebensmittel relevanten Konditionierungsgrößen Temperatur, relative Luftfeuchte und Luftdruck sind zuvor SOLL-Werte festgelegt worden, die bei einer bestimmten Temperatur beziehungsweise in einem vorgegebenen Temperaturintervall während des Temperaturänderungsprozesses vorliegen sollen. Die relative Luftfeuchte, die zur Wasseraktivität des Lebensmittels äquivalent ist, wird über die Konditionierungsgröße des absoluten Wassergehaltes erfasst. Der absolute Wassergehalt in der Umgebung des Lebensmittels steht in einem definierten Verhältnis zu der relativen Luftfeuchtigkeit desselben, die wiederum temperaturabhängig ist. Die SOLL-Werte sind so vorgegeben, damit das Lebensmittel bei dem konditionierenden Prozessschritt die gewünschten Eigenschaften/Qualitätsmerkmale aufweist. Hierbei kann es sich um einen Prozess des Abkühlens, beispielsweise von aus einem Ofen entnommenen Backwaren, einem Auftauen von tiefgekühlten Lebensmitteln oder auch um die Beibehaltung einer konstanten klimatischen Umgebung oder auch einer sich ändernden klimatischen Umgebung sein. Im Falle einer Temperaturänderung ändern sich die SOLL-Werte in Abhängigkeit von der Temperaturänderung des Lebensmittels. Bei einer steigenden Temperatur ändert sich beispielsweise auch die relative Feuchte, was durch Vorsehen entsprechender SOLL-Werte kompensiert werden kann. Bei Feststellen eines Sollwertsprunges einer Konditionierungsgröße wird auf die Umgebung des Lebensmittels in dem Konditionierungsraum entsprechend Einfluss genommen, um den aktuellen IST-Wert einer Konditionierungsgröße an den vorgesehenen SOLL-Wert anzugleichen.

Von Besonderheit bei dem Gegenstand dieser Erfindung ist, dass die Einflussnahme auf die Konditionierungsgrößen Temperatur, aus der relativen Luftfeuchte abgeleitete absolute Wassergehalt und Luftdruck über zwei Stellglieder vorgenommen wird. Das eine Stellglied ist eine Luftströmung, durch die das Lebensmittel in dem Konditionierungsraum angeströmt wird. Über eine entsprechende Beeinflussung können mit der Luftströmung in dem Konditionierungsraum die Lufttemperatur sowie der Luftdruck beeinflusst werden. Eine Beeinflussung der Temperatur ist durch eine entsprechende Temperierung des zugeführten Luftstroms möglich. Eine Einflussnahme auf den Luftdruck erfolgt über die zugeführte Luftmenge. Als zweites Stellglied für die Einflussnahme des Klimas in der Umgebung des Lebensmittels in dem Konditionierungsraum dient ein Aerosolgenerator zum Generieren von Aerosol, mit dem die Luftströmung beladen wird. Das Aerosol wird sodann luftstromgetragen in die Lebensmittelumgebung gebracht. Auf diese Weise kann den absoluten Wassergehalt in dem Konditionierungsraum und damit in der unmittelbaren Lebensmittelumgebung Einfluss genommen werden. Dabei dient die Luftströmung als Träger des Aerosols, dessen Tröpfen klein genug sind, um als Schwebfracht in der Luftströmung mitgeführt zu werden. Vorteilhaft ist es, wenn die Luftströmung erst innerhalb des Konditionierungsraumes oder bei ihrem Eintritt in den Konditionierungsraum in die Luftströmung eingebracht wird. Neben einer Änderung des absoluten Wassergehaltes in der Umgebung des Lebensmittels und damit der relativen Feuchte an der Oberfläche des Lebensmittels unterstützt das Aerosol bei einem Kühlprozess, wie beispielsweise einer Abkühlung von Backwaren nach ihrer Entnahme aus einem Ofen den Kühlprozess adiabatisch. Über eine entsprechende Temperierung des Aerosols kann ebenfalls Einfluss auf die Temperatur in dem Konditionierungsraum genommen werden. Die Verwendung von Aerosol hat den besonderen Vorteil, dass zu seiner Generierung keine Wärmequelle benutzt werden muss, und zwar im Unterschied zu einer Verwendung von Dampf. Auch ein Einsatz eines Kälteaggregates ist in aller Regel nicht erforderlich. Daher kann die Zuführung von kleinsten Aerosolflüssigkeitströpfchen in der gewünschten Temperatur erfolgen, ohne befürchten zu müssen, dass, wie dieses bei Dampf der Fall ist, auf temperaturabfallbedingte Kondensationsprozesse Rücksicht nehmen zu müssen.

Die Aerosolbeladung des Luftstromes kann genutzt werden, um Staubpartikel zu binden. In einer Bäckerei kann es sich hierbei beispielsweise um Feinstaub oder auch um Mehlstaub handeln. Das Binden von Staub führt zu einer Verbesserung der Luftbedingungen in dem von dem luftstromgetragenen Aerosol durchströmten Bereich. Da Staubträger von Mikroorganismen, insbesondere auch Schimmelsporen sein können, wird auf diese Weise eine Kontamination von Lebensmitteln wie beispielsweise Backwaren, verhindert.

Die Beeinflussung des Luftdruckes kann benutzt werden, um diesen zu erhöhen. Mit erhöhtem Luftdruck wird der Wasserdampfpartial-Druck aus einem Gebäck minimiert, wodurch die Frischhaltung der Backware weitergehend verlängert werden kann. Gleichermaßen wird der Zutritt von Mikroorganismen, wie etwa Schimmelsporen in die Backware hierdurch vermieden.

Da für die vorbeschriebene Einflussnahme des Klimas innerhalb des Konditionierungsraumes eine Luftströmung verwendet wird, eignet sich das vorbeschriebene Konditionierungsverfahren zum Konditionieren von Lebensmitteln in einem offenen Konditionierungsraum, durch den die Lebensmittel beispielsweise mit einem Stetigförderer, wie etwa einem Förderband gefördert werden. Aus dem Konditionierungsraum austretende Luft (Temperatur) und Luftfeuchtigkeit wird durch den Zustrom und die beschriebenen Regelung der klimatischen Umgebung des Lebensmittels kompensiert.

Die SOLL-Werte können das Ergebnis von Untersuchungsreihen an den Lebensmitteln sein. Gemäß einer bevorzugten Ausgestaltung wird die Wasseraktivität eines Lebensmittels in die Ermittlung der SOLL-Werte einbezogen. Auf die Wasseraktivität haben die vorgenannten klimatischen Größen Temperatur, absoluter Wassergehalt und Luftdruck bei einem Temperaturänderungsprozess Einfluss. Daher kann anhand dieser Werte das Umgebungsklima der Lebensmittel besonderes gut und hinreichend beschrieben werden. Dieses ist auch vor dem Hintergrund bemerkenswert, das eine Änderung in einer der vorgenannten Größen auch bei Konstantbleiben der anderen Größen mitunter unerwünschte Änderungen in der Qualität des Lebensmittels die Folge sind. Temperaturabhängig ändern sich beispielsweise die Wasseraufnehmfähigkeit ebenso wie Desorptions- und Absorbtionsprozesse im Lebensmittel. Die Wasseraktivitätswerte von Lebensmitteln sind in Bezug auf unterschiedliche Temperaturen bekannt. Aus diesem Grunde eignet sich die Wasseraktivität in besonderer Weise, um aufbauend auf dieser und der durchzuführenden Temperaturänderung die SOLL-Werte für das Klima in der Lebensmittelumgebung innerhalb des Konditionierungsraumes festzulegen.

Die Einstellung der relativen Luftfeuchte durch eine größere oder kleinere Aerosolbeladung hat zudem den Vorteil, dass das Aerosol als Träger für antimikrobielle und/oder antifungale Stoffe genutzt werden kann, wenn diese in den Konditionierungsraum eingebracht werden sollen. Als derartige Stoffe dienen biologische Stoffe. Diese werden bei der Bereitstellung von Aerosol im Unterschied zu einer Verwendung von Wasserdampf aufgrund der nicht erforderlichen Erhitzung des Wassers für eine Dampfgenerierung nicht zerstört. Wenn das Aerosol keimfrei sein soll, kann dieses durch elektromagnetische Strahlen, beispielsweise durch UV-Bestrahlung entkeimt werden. Dieses kann an den Prozess der Aerosolgenerierung gekoppelt sein. Möglich ist es auch, eine solche Entkeimung erst kurz vor dem Zutritt des Aerosols in den Luftstrom vorzunehmen.

Anstelle elektromagnetischer Verfahren zum Bereitstellen von keimfreien Aerosol besteht auch die Möglichkeit, kaltes Plasma durch Ionisation der Luft herzustellen, was zur Plasmaclusterbildung bei Mikroorganismen und damit zu deren Abtötung führt. Kaltes Plasma kann dem Luftstrom beigefügt werden. Ein solcher Luftstrom ist dann nicht nur keimfrei, sondern wirkt zudem entkeimend. Abgetötet werden durch diese Maßnahme somit beispielsweise Bakterien, Hefen sowie Schimmelpilze. Die vorgeschriebenen Möglichkeiten des Zuführens von keimfreien Aerosol oder auch dem Zuführen von kaltem Plasma durch Ionisation des Luftstroms kann sowohl im Zusammenhang mit einer Bearbeitung von Lebensmittel bei Raumtemperatur, beim Abkühlen oder beim Auftauen eingesetzt werden.

Die Einflussnahme auf das Klima innerhalb des Konditionierungsraumes durch eine Luftströmung kann in sehr kurzer Zeit, quasi spontan erfolgen, und zwar sowohl in Bezug auf eine gewünschte Temperaturänderung, eine Änderung in der Strömungsgeschwindigkeit oder auch in seiner Aerosolbeladung. Dieses bedingt nicht nur eine rasche Anpassung eines IST-Wertes an einen SOLL-Wert bei einem festgestellten Sollwertsprung, sondern erlaubt zudem eine sehr exakte Führung dieser Konditionierungsgrößen sei es zum Konstanthalten einer klimatischen Umgebung des Lebensmittels oder auch bei Temperaturänderungsprozessen über die gesamte Dauer des Konditionierungsprozesses. Aus diesem Grunde eignet sich dieses Verfahren zur Verbesserung der Einstellung der gewünschten Lebensmittelqualität auch, um in den Regelungsprozess klimatische Daten, die außerhalb des Konditionierungsraumes und typischerweise außerhalb des Gebäudes, in dem sich der Konditionierungsraum befindet, einfließen zu lassen. Eine solche Einflussnahme erfolgt, sollte dieses notwendig sein, sodann vorausschauend, um größere Sollwertsprünge innerhalb des Konditionierungsraumes zu vermeiden. Derartige Sollwertsprünge können beispielsweise luftdruckbedingt sein. Ändert sich, etwa aufgrund einer Wetteränderung außerhalb des Gebäudes der absolute Wassergehalt, die Temperatur und/oder der Luftdruck rasch, wird sich dieses in einem offenen Konditionierungsraum mit einer bestimmten Verzögerung bemerkbar machen. Um einen dann in dem Konditionierungsraum festgestellten größeren Sollwertsprung nicht über seine gesamte Größe spontan ausregeln zu müssen, was zu einem Über- oder Unterschwingen führen kann, kann durch rechtzeitiges Ändern der Stellgröße auf zumindest eines der Stellglieder auf den erwarteten Sollwertsprung bereits reagiert werden. Berücksichtigt wird bei dieser Einflussnahme dabei diejenige Zeit, die eine solche klimatische Änderung, festgestellt außerhalb des Konditionierungsraumes, benötigt, um sich in dem Konditionierungsraum bemerkbar zu machen. Die Folge ist, dass außerhalb des Konditionierungsraumes abspielende klimatische Änderungen dann nicht negativ auf die Qualität des der Konditionierung unterworfenen Lebensmittels durchschlagen. Damit kann eine hohe Lebensmittelqualität auch bei herstellungsbedingten Temperaturänderungsprozessen selbst bei sich rasch abspielenden klimatischen Änderungen in der Umgebung des Konditionierungsraumes gewährleistet werden.

Mit diesem Verfahren können auch regelmäßig wiederkehrende klimatische Änderungen außerhalb des Konditionierungsraumes antizipiert werden, wie etwa der Temperaturgang über den Tag, mit dem sich auch der Taupunkt, der absolute Wassergehalt in der Umgebungsluft ändern. Entsprechendes gilt für jahreszeitliche Änderungen bei diesen klimatischen Größen.

In gleicher Weise können Luftströmungsbeeinflussungen, die sich in dem Konditionierungsraum bemerkbar machen, beispielsweise durch Konvektion oder durch einen Windzug im Gebäude, ohne Nachteile in der Qualität des Lebensmittels hinnehmen zu müssen, durch dieses Verfahren kompensiert werden.

Neben den bereits beschriebenen klimatischen Daten werden bei diesem Konditionierungsverfahren zusätzlich auch der CO₂-Gehalt und/oder der O₂-Gehalt in der Umgebung des Lebensmittels überwacht. Die Überwachung und Regelung der Konzentration von CO₂ und/oder O₂ in der Umgebungsumgebung eines Lebensmittels bei einer Konditionierung desselben ist mitunter förderlich, beispielsweise bei der Herstellung von Teig für Backwaren oder im Zusammenhang mit einem Betrieb von anderen Gäranlagen. Bei der Herstellung von Teig wird, um eine bestimmte Teigqualität aufrechtzuerhalten, ein bestimmter Sauerstoffgehalt in der Umgebungsluft des Teiges beim Gären benötigt. Bei dem Gärprozess wird durch die beim Gären entstehenden Gase, wie Kohlendioxid oder Ethanol der Sauerstoffgehalt in der Umgebung des Lebensmittels entsprechend verdünnt, mithin reduziert. Damit beim Gärprozess die Gärleistung der Hefe nicht soweit verringert wird, um die Gärung nicht zu hemmen, ist ein bestimmter Sauerstoffmindestgehalt in der Umgebung des Teiges erforderlich. Sauerstoff wird auch für die Bildung aromawirksamer Stoffe beim Gären benötigt. Auch kann die Teigrheologie durch einen Sauerstoffmindestgehalt positiv beeinflusst werden, ebenso wie das daraus hergestellte Gebäckvolumen. Insbesondere Weizenteige sind oxidativ stabilisiert. Aus diesem Grunde und auch zum Gewährleisten der notwendigen Luftqualität für in der Produktion arbeitende Personen wird in einer Ausgestaltung des Verfahrens der Gehalt bestimmter Gase, etwa der O₂-Gehalt und/oder der CO₂-Gehalt und/oder die Ethylengehalt-Konzentration in dem offenen Konditionierungsraum mit entsprechenden Sensoren überwacht. Typischerweise werden die Konzentration der beiden Gase CO₂ und O₂ überwacht. Diese erfassten Gasgehalts-IST-Werte werden mit vorgegebenen SOLL-Werten bezüglich der CO₂- und O₂-Gehalte verglichen. Bei Feststellen einer auszuregelnden Abweichung wird in den Konditionierungsraum über den für die Konditionierung vorgesehenen Luftstrom sauerstoffreichere Zuluft zugeführt, ggf. verbunden mit einer Erhöhung der zugeführten Luftmenge. Ein zu niedriger Sauerstoff-Gehalt wird auf diese Weise erhöht. Zugleich wird der CO₂-Gehalt reduziert. Die sauerstoffreichere Zuluft wird gemäß einer Ausgestaltung dieses Verfahrens durch Zuführen von Umgebungsluft von außerhalb des Gebäudes, in dem sich der Konditionierungsraum befindet, bereitgestellt. Dieses kann durch Öffnen oder Vergrößern einer bereits offenen Gebäudeöffnung, beispielsweise einer Belüftungsklappe oder dergleichen herbeigeführt werden.

Über den Sauerstoffgehalt in der Umgebung der Teiglinge kann der Gärungsprozess und somit auch die Qualität von Teig und Gebäck optimiert werden. Es wird angenommen, dass im Rahmen dieser Ausführungen erstmals beschrieben wird, dass es günstig ist den Sauerstoffgehalt in Gärräumen in Bezug auf den Ablauf des Gärprozesses zu überwachen. Mit einem bestimmten Sauerstoffgehalt kann die Gärung beschleunigt und die Ausbildung von Aroma- bzw. Geschmacksstoffen in den Gebäcken verbessert werden. Zudem hat der Sauerstoffgehalt Einfluss auf die Teigstabilität für eine verbesserte Handhabung der Teiglinge, beispielsweise in Bezug auf ein verbessertes Backvolumen oder eine erhöhte Gefrier-Tau-Resistenz.

Bei Früchten kann beispielsweise die Ethylenkonzentration überwacht werden, die ebenfalls bestimmte Werte nicht übersteigen darf. Bei einer Behandlung von rotem Fleisch als Lebensmittel ist das Vorhandensein eines höheren Sauerstoffgehaltes vorteilhaft, da dann die rote Farbe länger erhalten werden kann.

Es wird angenommen, dass der Zusammenhang zwischen der Qualität eines Teiges und der O₂- bzw. CO₂-Konzentration in der Umgebung des Teiges erstmalig als qualitätsbeeinflussende Faktoren für die Teigherstellung und das daraus herzustellende Gebäck erkannt worden sind. In einer bevorzugten Ausgestaltung ist daher vorgesehen, die diesbezüglichen Gase hinsichtlich ihrer Konzentration zu überwachen und in Bezug auf ein vorbestimmtes Niveau einzuregeln.

Anstelle oder auch ergänzend zu einer Überwachung der CO₂- und O₂-Konzentration in der atmosphärischen Umgebung des Lebensmittels (Umgebungsluft) können ebenfalls andere Gase hinsichtlich ihrer Konzentration überwacht werden. Wird der Konditionierungsprozess beispielsweise in einer Schutzgasatmosphäre durchgeführt, beispielsweise in einer Stickstoffumgebung, kann die Konzentration dieses Gases überwacht und geregelt werden.

Im Zusammenhang mit einer Konditionierung von Lebensmittel im Zuge eines Auftauprozesses kann ebenfalls die Konzentration bestimmter Gase, beispielsweise der Sauerstoffgehalt überwacht werden. Mitunter soll der Sauerstoffgehalt in einer Auftauatmosphäre einen bestimmten Wert nicht überschreiten, um Oxidationsprozesse während des Auftauens zu unterbinden.

Das vorbeschriebene Verfahren eignet sich für unterschiedliche Prozesse. Bei der Bearbeitung, der Verarbeitung und/oder der Herstellung von Lebensmitteln. Hierzu zählen beispielsweise das Abkühlen von erwärmten, insbesondere gebackenen Lebensmitteln oder auch das Auftauen tiefgefrorener Lebensmittel ebenso wie das Konstanthalten eines Umgebungsklimas oder einer Änderung des Umgebungsklimas über einen Prozesszeitraum hinweg, wie dieses beispielsweise beim Gären von Teig gewünscht wird.

Das beschriebene Verfahren eignet sich im besonderen Maße auch für Temperaturänderungsprozesse, bei denen die Temperaturänderung in zwei oder mehr Stufen durchgeführt wird und in jeder Stufe unterschiedliche klimatische Bedingungen in der Lebensmittelumgebung gewünscht werden.

Die vorbeschriebene Regelung kann mit an sich bekannten Regelalgorithmen vorgenommen werden. In vielen Fällen werden in einem solchen Fall die einzelnen Stufen in Verbindung miteinander stehen, so dass die Abluft einer ersten Stufe in die zweite Stufe strömt (oder umgekehrt). Durch die jeder Stufe zugeführte und unabhängig voneinander einstellbare Luftströmung und Aerosolzuführung kann auch in einem solchem Fall in jeder Stufe das gewünschte Klima in der Lebensmittelumgebung eingestellt und den Regelungsprozess aufrecht erhalten werden.

Bei dem Konditionierungsraum kann es sich um letztendlich jeden beliebigen Raum handeln. So kann beispielsweise der Konditionierungsraum ein Bereich eines Gebäudes sein, und zwar ohne weitere räumliche Unterteilung. Möglich ist es auch, wie bereits vorstehend beschrieben, dass der Konditionierungsraum ein Durchlauftunnel ist. Ein solcher Konditionierungsraum kann durchaus auch ein abgeschlossener Raum sein. Durchaus können in einem Gebäude mehrere Konditionierungsräume angeordnet sein, die durchaus auch miteinander in Wirkverbindung bezüglich des Einstellens und Aufrechterhalten der jeweils gewünschten klimatischen Umgebung der Lebensmittel miteinander in Wirkverbindung stehen können.

Nachfolgend ist die Erfindung anhand von Ausführungsbeispielen beschrieben. Es zeigen:
- **Fig. 1:**: Ein Blockdiagramm zur Erläuterung eines Verfahrens zum Abkühlen von Backwaren nach deren Entnahme aus einem Ofen und
- **Fig. 2:**: eine schematisierte Darstellung einer Auftauanlage zum Durchführen des erfindungsgemäßen Verfahrens.

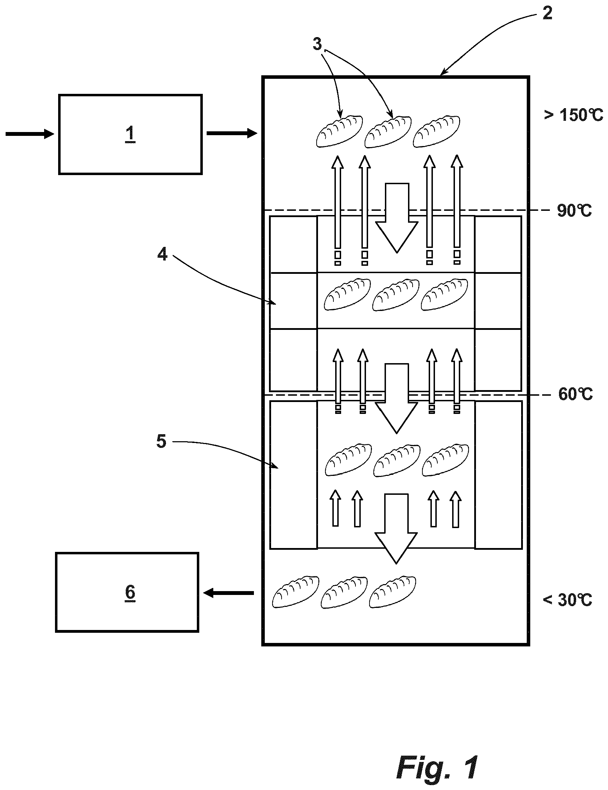

Erstes Ausführungsbeispiel:
Die in einem Durchlaufofen 1 gebackenen Backlinge werden als Backwaren nach Beendigung des Backprozesses aus dem Ofen 1 entnommen. Dieses kann kontinuierlich oder aus diskontinuierlich erfolgen. Die aus dem Ofen 1 entnommenen Backwaren werden in eine Kühleinrichtung, die bei dem Ausführungsbeispiel der Figur 1 als Kühlturm 2 ausgeführt ist, eingebracht. Der Kühlturm 2 stellt bei diesem Ausführungsbeispiel einen Konditionierungsraum dar. In dem Kühlturm 2 werden die Backwaren, wie in Figur 1 durch die nach unten gerichteten Blockpfeile schematisch gezeigt, von oben nach unten gefördert. Dieses kann, wie in Figur 1 schematisiert in vertikaler Richtung erfolgen oder auch über eine Spirale oder eine andere Förderstrecke, mit der die Backwaren von einer oberen Ebene in eine untere Ebene gefördert werden. Typischerweise werden die Backwaren über eine Förderspirale in der genannten Richtung gefördert, und zwar mit einem Gefälle zwischen 7 % und 10 %. Die Einrichtung eines Gefälles von 8 % hat sich bewährt.

Die schematisiert als Brote 3 in der Figur dargestellte Backware, die bei einer Ofentemperatur von mehr als 160°C gebacken worden sind, strahlen u.a. Wärme und Wasserdampf ab. Mithin entsteht in dem Kühlturm 2 bereits hierdurch, wie durch die nach oben gerichteten Blockpfeile angedeutet, ein Aufwind. Wenn die Brote 3 über eine gewisse Strecke in dem Kühlturm 2 entgegen dieser Strömungsrichtung gefördert worden sind, gelangen diese in eine Temperaturzone, in der mit einer Aerosol-Behandlung begonnen wird. Eine obere Aerosol-Behandlungstemperatur beginnt bei dem dargestellten Ausführungsbeispiel bei 90°C - 95°C Kerntemperatur der Backware. Die obere Aerosol-Behandlungstemperatur liegt in jedem Fall unter 100°C. Ab dieser Höhe im Kühlturm 2 befindet sich eine Luft- und Aerosolzuführung 4, durch die Aerosol, luftgestützt getragen, mit einer Temperatur von etwa 25° C in den Kühlturm 2 zum Beaufschlagen der abzukühlenden Brote 3 eingebracht wird. Die Luft- und Aerosolzuführung erfolgt umfänglich in dieser Kühlstrecke des Kühlturms 2. Die luftgestützte Zuführung des Aerosols bedingt die Ausbildung eines gewissen Überdruckes im Bereich der Luft- und Aerosolzuführung 4 und somit in demjenigen Bereich, in dem sich die abzukühlenden Backwaren befinden. Der erzeugte Überdruck beträgt bei dem dargestellten Ausführungsbeispiel etwa 10 - 20 Pa.

In dem Kühlturm 2 befinden sich an geeigneter Stelle in der Nähe der abzukühlenden Backwaren Sensoren, mit denen die klimatische Umgebung der Backwaren erfasst wird. Erfasst werden bei dem dargestellten Ausführungsbeispiel die Temperatur, der Luftdruck und die absolute Luftfeuchte. Die mit diesen Sensoren erfassten IST-Werte werden mit vorgegebenen SOLL-Werten, die in der Umgebung der abzukühlenden Backwaren in einem bestimmten Bereich des Kühlturms 2 vorliegen sollen, verglichen. Die SOLL-Werte sind solche, die das gewünschte Abkühlklima definieren, um bei den abzukühlenden Broten 3 die gewünschten Eigenschaften und Qualitätsmerkmale einstellen zu können. Somit kann beispielsweise über den Umgebungsdruck und die relative Luftfeuchte der Feuchtigkeitsgehalt der abkühlenden Brote und damit deren Wasseraktivität beeinflusst werden. Dabei dient der SOLL-Druck, um bei dem dargestellten Ausführungsbeispiel einer zu starken Feuchtigkeitsabgabe der Brote 3 beim Abkühlen entgegen zu wirken. Bei Feststellen einer Differenz zwischen einem erfassten IST-Wert einer der überwachten klimatischen Größen und dem vorgegebenen SOLL-Wert, welche Differenz eine gewisse zugelassene Toleranz überschreitet, wird auf das Klima in der Umgebung der abzukühlenden Backwaren entsprechend Einfluss genommen. In einem solchen Fall liegt ein auszuregelnder Sollwertsprung vor.

Die Einflussnahme auf die klimatische Umgebung der zu konditionierenden Lebensmittel erfolgt über die beiden Stellglieder - Luftströmung und Aerosolbeladung. Angesteuert werden in Abhängigkeit von dem auszuregelnden Sollwertsprung und/oder der auszuregelnden klimatischen Größe entweder die Luftströmung in Bezug auf ihre Strömungsgeschwindigkeit (Druckveränderung) und/oder ihre Temperatur. Ergänzend oder alternativ kann die Aerosolbeladung beeinflusst beziehungsweise geändert werden. Mit dieser wird man vornehmlich auf die Einstellung des gewünschten absoluten Wassergehaltes zum Ändern oder Aufrechterhalten der relativen Luftfeuchte eines Lebensmittels beeinflussen.

Dem aufsteigenden, durch Konvektion begründeten Warmluftstrom folgend, strömt die Luft auch in Folge des eingestellten Überdruckes nach oben ab. Die Zuführung des Aerosols in diesem Abschnitt des Kühlturms 2 ist an die sich in diesem Abschnitt reduzierende Temperatur der Brote 3 angepasst. Die Brote 3 werden kontinuierlich durch diese Zone der Luft- und Aerosolzuführung 4 gefördert. Zu diesem Zweck ist die Aerosolzuführung 4 bei dem dargestellten Ausführungsbeispiel durch drei Aerosolzuführungssegmente realisiert, wobei die Zuführmenge des Aerosols von dem obersten Aerosolzuführungssegment zu dem untersten Aerosolzuführungssegment in diesem Abschnitt des Kühlturmes 2 hin abnimmt. Die Aerosolzuführmenge ist so eingerichtet, dass die Brote 3 bei dem Prozess ihrer Förderung durch diesen Abschnitt keinen Gewichtsverlust erleiden, vielmehr eine gewisse Gewichtszunahme erfahren. Bei dem dargestellten Ausführungsbeispiel wird die Aerosolzuführmenge so eingestellt, dass die Wassersättigung im Bereich der Brote 3 in etwa gleich bleibt, beispielsweise bei etwa 80% relativer Feuchte. Geregelt wird das Klima in der Umgebung der Brote 3 durch den bereits vorstehend beschriebenen Prozess eines Abgleiches mit zuvor festgelegten SOLL-Werten. Bei dem dargestellten Ausführungsbeispiel ist eine mittlere Aerosol-Behandlungstempe-ratur bei der die erste Aerosol-Behandlungsphase endet, erreicht, wenn die Brote 3 auf eine Oberflächentemperatur der Backware von 65°C abgekühlt sind. Somit endet die Aerosol-Behandlungsphase innerhalb des Kühlturms 2 in einer Höhe, in der die Brote 3 nur noch eine Oberflächentemperatur von 65°C aufweisen. Bei diesem Ausführungsbeispiel wird als mittlere Produkt-Oberflächen-Behandlungstemperatur eine Temperatur von 65°C vorgesehen, um einen Sicherheitsfaktor zu haben, da bei einer Temperatur unter 60°C eine mikrobielle Rekontamination der Brote 3 möglich ist.

Um eine Rekontamination der Brote 3 zu verhindern, wird in der sich anschließenden zweiten Aerosol-Behandlungsphase keimfreie Luft zugeführt. Hierzu dient eine in dem Kühlturm 2 in einer zweiten, sich an die erste Kühlstrecke anschließenden Kühlstrecke angeordnete Luft- und Aerosolzuführung mittels einer entsprechenden Einrichtung 5 auch in dieser Kühlstrecke wird das luftgetragene Aerosol umfänglich im Bezug auf die Kühlstrecke eingebracht. Während die Aerosolzuführung in dem Aerosol-Behandlungsbereich der ersten Kühlstrecke während der ersten Phase einer Aerosol-Behandlung so eingerichtet ist, dass das Aerosol bis in den Kern der Brote 3 eindiffundieren kann, wird die Aerosolzuführung in dem Restauskühlbereich und somit während der zweiten Aerosol-Behandlungsphase vornehmlich auf die Oberfläche der Brote einwirken. Die mit dem Aerosol in dieser Phase zugeführten biologischen Additive sind ebenfalls ausgelegt, einer Rekontamination vorzubeugen, bzw. zu vermeiden. In dieser zweiten Aerosol-Behandlungsphase wird das Aerosol mit keimfreier Luft in die Kühlstrecke eingebracht. Der durch die Luft- und Aerosolzuführung in dieser zweiten Kühlstrecke eingestellte Druck liegt um etwa 10 Pa höher als der in der ersten Kühlstrecke eingestellte Druck. Durch diese Maßnahme ist wirksam ein Zustrom von Luft aus der ersten Kühlstrecke in die zweite Kühlstrecke verhindert. Ebenso ist verhindert, dass durch einen Ausgang, durch den die restausgekühlten Backwaren aus dem Kühlturm 2 herausgebracht werden, durch diesen nicht keimfreie Umgebungsluft in den Kühlturm 2 eindringt. Diese Restauskühlphase endet, wenn die ab- und ausgekühlten Backwaren die Umgebungstemperatur oder eine hinreichende Abkühlung erfahren haben, um einer weiteren Bearbeitung zugeführt werden zu können. Bei dem dargestellten Ausführungsbeispiel werden die Brote 3 einer Schneidemaschine 6 als weiteren Bearbeitungsschritt nach dem Kühlturm 2 zugeführt und dort geschnitten, bevor diese verpackt werden.

Die vorstehende Beschreibung der Kühleinrichtung macht deutlich, dass es sich bei dieser um eine Durchlaufkühleinrichtung handelt, die gegenüber der Umgebungen nicht hermetisch abgeschlossen ist.

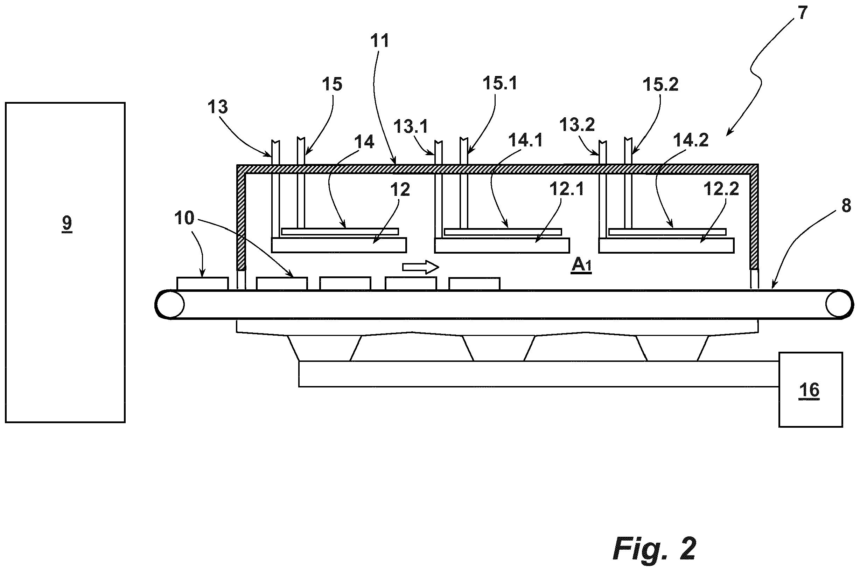

Zweites Ausführungsbeispiel:
In dem zweiten Ausführungsbeispiel ist eine Auftauanlage 7 beschrieben. In dieser erfolgt ein Temperaturänderungsprozess, dem das Lebensmittel unterworfen ist, in umgekehrter Richtung. Die Auftauanlage 7 dieses Ausführungsbeispiels (siehe Figur 2) ist als durchlaufende Einrichtung konzipiert. Diese umfasst eine Fördereinrichtung 8 zum Transportieren der aufzutauenden, entpackten, tiefgekühlten Lebensmittel, die einem Tiefkühlraum 9 entnommen werden. Die Transportrichtung der Fördereinrichtung 8 ist in Figur 2 mit einem Pfeil kenntlich gemacht. Die Fördereinrichtung 8 ist hinreichend breit, um mehrere aufzutauende Lebensmittel, bei denen es sich bei dem dargestellten Ausführungsbeispiel um Fischblöcke 10 handelt, nebeneinander platzieren zu können. Die Auftauanlage 7 verfügt über eine Haube 11, unter der sich die Auftaustrecke befindet. Die Haube 11 dient zum Schutze der aufzutauenden Lebensmittel und zur thermischen bzw. klimatechnischen Isolierung der Auftaustrecke gegenüber der Umgebungstemperatur. Der Raum unterhalb der Haube 11 stellt bei diesem Ausführungsbeispiel den Konditionierungsraum dar. Diese wird zumeist deutlich höher liegen, als diejenige Temperatur, bei der die tiefgefrorenen Lebensmittel, hier: die Fischblöcke 10, aufgetaut werden sollen. Durch die Haube 11 ist eine Auftaukammer A₁ bereitgestellt. Diese bildet bei diesem Ausführungsbeispiel den Konditionierungsraum. Da die Fördereinrichtung 8 die aufzutauenden Lebensmittel 10 durch die Auftaukammer A₁ hindurch transportiert, ist die Auftaukammer A₁ als Auftautunnel konzipiert.

Die Transportstrecke, auf der die Fischblöcke 10 auf der Fördereinrichtung 8 transportiert werden, ist nach Art eines Rasters gelocht, um einen Luftstrom hindurchleiten zu können. Zudem wird durch die Lochung unter Umständen auftretendes Tropfwasser von dem bzw. den aufzutauenden Lebensmitteln weggeführt. Zu diesem Zwecke findet sich unterhalb dieser Transportstrecke ein in den Figuren nicht dargestelltes Tropfauffangblech.

Oberhalb der Fördereinrichtung 8 und innerhalb der Haube 11 befinden sich mehrere Luftaustrittsschläuche 12, 12.1, 12.2, bei denen es sich bei dem dargestellten Ausführungsbeispiel um textile Schläuche handelt. Die Luftaustrittsschläuche 12, 12.1, 12.2 sind jeweils an eine Luftzufuhr 13, 13.1, 13.2 angeschlossen, über die Luft in die Luftaustrittsschläuche 12, 12.1, 12.2 und aus diesen heraus in die Auftaukammer A₁ eingebracht wird. Die jeweilige Luftzufuhr 13, 13.1, 13.2 umfasst zu diesem Zweck in Figur 2 nicht dargestellte Betriebsaggregate, wie etwa eine Pumpe, Filter, eine Temperiereinrichtung und dergleichen. Die Menge der zugeführten Luft ist einstellbar. Benachbart zu jedem Luftaustrittsschlauch 12, 12.1, 12.2 befindet sich ein perforiertes Aerosolaustrittsrohr 14, 14.1, 14.2, über welches über eine Aerosolzufuhr 15, 15.1, 15.2 Aerosol ausgegeben werden kann. Erzeugt wird das Aerosol ohne eine zwingend erforderliche Temperaturzufuhr z.B. mittels eines Ultraschallaerosolgenerators derart, dass dieses eine Tröpfchengröße von etwa 0,001 bis 0,005 mm oder kleiner aufweist. Angeordnet ist das jeweilige Aerosolaustrittsrohr 14, 14.1, 14.2 in Bezug auf den jeweils benachbarten Luftaustrittsschlauch 12, 12.1 bzw. 12.2, damit der aus dem jeweiligen Luftaustrittsschlauch 12, 12.1 bzw. 12.2 austretende Luftstrom die aus dem jeweiligen Aerosolaustrittsrohr 14, 14.1, 14.2 austretenden Aerosoltröpfchen aufnimmt und diese sodann als Schwebfracht mit dem Luftstrom transportiert werden. Jede Einheit umfassend ein Luftaustrittsrohr 12, 12.1 bzw. 12.2 und ein Aerosolaustrittsrohr 14, 14.1 bzw. 14.2 dient somit zum Zuführen von Luft und Aerosol, wobei die jeweilige Zuführung unabhängig voneinander steuerbar ist. Diese Einheiten sind im Folgenden als Luft-Aerosol-Zuführeinheiten angesprochen.

Unterhalb der Fördereinrichtung befindet sich eine im Übrigen nicht näher dargestellte Absaugung 16. Die Absaugung 16 umfasst einen unterhalb der Fördereinrichtung 8 angeordneten Sammler (in Figur 2 in einer Seitenansicht gezeigt). Der Sammler ist so konzipiert, dass eine Absaugöffnung jeder Luft-Aerosol-Zuführeinheit zugeordnet ist und sich somit unterhalb derselben befindet. Die Absaugung 16 kann aktiv betrieben werden, um aus der Auftaukammer A₁ Luft und Aerosol abzusaugen. Dieses dient dem Zweck, innerhalb der Auftaukammer A₁ einen gerichteten aerosolbeladenen Luftstrom von den Luftaustrittsschläuchen 12, 12.1, 12.2 zu der Fördereinrichtung 8 mit der oder den darauf befindlichen Fischblöcken 10 und in Richtung zur Absaugung 16 zu generieren. Zum Durchlassen des aerosolbeladenen Luftstromes durch die Fördereinrichtung 8 ist diese gelocht, sodass der Luftstrom auch zwischen den nebeneinander liegenden Fischblöcken 10 an diesen vorbeiströmt. Grundsätzlich ist es ausreichend, wenn ein solcher Luftstrom auch auf passive Weise erzeugt wird, sodass die vorbeschriebene Luftströmung allein durch die über die Luftaustrittsschläuche 12, 12.1, 12.2 in die Auftaukammer A₁ eingebrachte Luft erfolgt. Um die gewünschte Luftströmung zu erzielen, verfügt die Auftaukammer sodann über einen oder mehrere entsprechende Luftaustritte.

Die Luftzufuhr und die Aerosolzufuhr dienen als Stellglieder zum Einstellen des Auftauklimas in der Umgebung der aufzutauenden Lebensmittel, hier: der Fischblöcke 10. Zu diesem Zweck sind in dem durch die Haube 11 gebildeten Konditionierungsraum entsprechende Sensoren angeordnet, um die gewünschten klimatischen Daten: Temperatur, Luftdruck und absoluter Wassergehalt zu erfassen. In einer Steuereinheit werden diese mit vorgegebenen SOLL-Werten verglichen, die das Klima in unmittelbarer Umgebung der aufzutauenden Fischblöcke 10 in Abhängigkeit von dem Fortschritt des Auftauvorganges und damit in Abhängigkeit von der Position der aufzutauenden Fischblöcke 10 innerhalb des Auftautunnels definieren. In Abhängigkeit von dem auszuregelnden Sollwertsprung, wie bereits zu dem ersten Ausführungsbeispiel beschrieben, wird eines oder es werden beide Stellglieder entsprechend angesteuert.

Die aus dem Tiefkühlraum 3 genommenen Fischblöcke 10 werden entpackt und zum Zwecke ihres Auftauens auf die Fördereinrichtung 8 aufgelegt. Die Fischblöcke 10 weisen dann typischerweise eine Temperatur von ca. -25 bis -20 °C auf. Die Fischblöcke 10 werden dann in der Auftauanlage 7 unterhalb der Haube 11 in der durch diese eingefassten Auftaukammer A₁ in einer luftstromgetragenen Aerosolumgebung aufgetaut. Die über die Luftaustrittsschläuche 12, 12.1, 12.2 zugeführte Luft wird bei dem dargestellten Ausführungsbeispiel mit einer Temperatur von +4 °C zugeführt. Dieses ist die gewünschte Auftautemperatur, die sodann in der Auftaukammer A₁ vorherrscht. Mit dem Luftstrom wird das von diesem getragene Aerosol, zu welchem Zweck die Aerosolaustrittsrohre 14, 14.1, 14.2 mit Aerosol beaufschlagt werden, den aufzutauenden Fischblöcken 10 zugeführt. Durch diese Maßnahme wird aufgrund des deutlich besseren Wärmeüberganges im Vergleich zu einer nicht aerosolbeladenen Auftauumgebung die für das Auftauen benötigte Zeit reduziert. Zugleich wird mit der in Form des Aerosols bereitgestellten Feuchte ein Auftaumilieu bereitgestellt, welches bei dem Auftauen der beispielhaft beschriebenen Fischblöcke 10 quasi wassergesättigt ist oder anders ausgedrückt: Diese aufgrund einer hohen Gleichgewichtsfeuchte nicht nennenswert austrocknen. Dieses trägt auch Sorge dafür, dass die auftauenden Fischblöcke 10 nicht, jedenfalls produktspezifisch nicht nennenswert austrocknen. Die aerosolbeladene Luftzufuhr ist im Zusammenspiel mit der Absaugung 16 derart eingestellt, dass im Bereich der auf der Fördereinrichtung 8 transportierten Fischblöcke 10 ein gegenüber dem Umgebungsdruck gewisser Überdruck herrscht. Es wird ein solcher Überdruck eingestellt, der dem sich in den Fischblöcken 10 im Zuge des Auftauprozesses aufbauenden Dampfdruckes näherungsweise entspricht, so weit dieses möglich ist. Erreicht wird durch diese Maßnahme, dass der im Zuge des Auftauprozesses sich im Lebensmittel - einem Fischblock 10 - aufbauende Dampfdruck nicht oder jedenfalls nicht im nennenswerten Maße entweicht und somit ein Masseverlust, den man ansonsten beim Auftauen von tiefgekühlten Lebensmitteln billigend in Kauf nehmen muss, entweder ganz oder zumindest weitestgehend vermieden ist.

Die aufgetauten Fischblöcke 10 verlassen die Haube 11 mit einer KernTemperatur von etwa ±0 °C bis +4 °C. Dort werden die aufgetauten Fischblöcke 10 von der Fördereinrichtung 8 abgenommen und der weiteren Verarbeitung zugeführt. Die Durchlaufgeschwindigkeit der Fischblöcke 10 durch den Auftautunnel beträgt typischerweise zwischen 4 und 8 Stunden. In den beiden vorbeschriebenen Ausführungsbeispielen wird das Aerosol mit einem Ultraschallgerät erzeugt. Dieses ist energiesparend. Zudem kann eine sehr definierte Tröpfchengröße in einem engen Größenspektrum eingestellt werden. Von besonderem Vorteil ist, dass zur Aerosolgenerierung keine höhere Temperatur benötigt wird, so dass das Aerosol auch als Träger für antimikrobielle und/oder antifugale Stoffe genutzt werden können.

Die beiden vorbeschriebenen Ausführungsbeispiele lassen deutlich werden, dass allein mit zwei Stellgliedern - einer Luftströmung und einer Aerosolzuführung - in besonders einfacher und energiesparender Weise ein zur Steigerung der Produktqualität bei einer Temperaturänderung geeignetes Klima innerhalb eines Konditionierungsraumes eingerichtet werden kann.

Die notwendige Sensorik zum Durchführen der beschriebenen Verfahren ist in den Figuren der Einfachheit halber nicht dargestellt, ebenso wie der Umstand, dass diese an eine elektronische Steuereinrichtung angeschlossen sind, die ihrerseits auf die Stellglieder Einfluss nimmt.

Die Beschreibung der Erfindung anhand der Ausführungsbeispiele lässt deutlich werden, dass mit dem erfindungsgemäßen Verfahren in einfacher und besonders wirkungsvoller Art und Weise das Klima in der unmittelbaren Umgebung von Lebensmitteln den jeweiligen Bedürfnissen entsprechend eingerichtet werden kann. Die für die Konditionierung vorgesehene Luftströmung trägt zudem zu einem Luftwechsel in dem Konditionierungsraum bei. Mit dem vorbeschriebenen Verfahren kann bei entsprechender Vorgabe von SOLL- Konditionierungsgrößen auch eine Be- und Entfeuchtung vorgenommen werden.

Mit dem beschriebenen Verfahren kann, beispielsweise bei Unterbrechungen in der Lebensmittelbearbeitung, der Lebensmittelverarbeitung und/oder der Lebensmittelherstellung in dem Konditionierungsraum mit denselben Maßnahmen der Konditionierungsraum gereinigt werden, beispielsweise durch eine Zugabe entsprechender Stoffe in das Aerosol, beispielsweise um den Konditionierungsraum und seine Wände keimfrei zu machen. Von besonderem Vorteil ist zudem, dass, wie dieses bei den Ausführungsbeispielen beschrieben ist, eine klimatische Konditionierung auch in offenen Konditionierungsräumen und somit bei einem kontinuierlichen Lebensmittelbearbeitungsprozess, Lebensmittelverarbeitungsprozess und/ oder Lebensmittelherstellungsprozess genutzt werden kann. Dieses bedeutet, dass in dem Konditionierungsraum ein gleichbleibendes Klima belassen werden kann. Hiervon unterscheidet sich dieses Verfahren signifikant von herkömmlichen Verfahren, in denen eine Konditionierung in geschlossenen Räumen batchweise vorgenommen worden ist. Das Einbringen und auch das Herausnehmen eines Lebensmittels in bzw. aus einem solchen Konditionierungsraum führt zu signifikanten Änderungen in dem Klima in dem Konditionierungsraum. Die Folge sind hygienische Probleme.

Eingesetzt werden kann dieses Verfahren auch im Zusammenhang mit einer Lagerung von Lebensmitteln oder von Rohstoffen für Lebensmittel.

Auch wenn die Erfindung anhand von einigen Ausführungsbeispielen beschrieben ist, ergeben sich für einen Fachmann zahlreiche weitere Möglichkeiten im Rahmen der geltenden Ansprüche das Verfahren umzusetzen und einzusetzen.

### Bezugszeichenliste

- 1: Durchlaufofen
- 2: Kühlturm
- 3: Brot
- 4: Luft- und Aerosolzuführung
- 5: Luft- und Aerosolzuführung
- 6: Schneidemaschine
- 7: Auftauanlage
- 8: Fördereinrichtung
- 9: Tiefkühlraum
- 10: Fischblock
- 11: Haube
- 12, 12.1, 12.2: Luftaustrittsschlauch
- 13, 13.1, 13.2: Luftzufuhr
- 14, 14.1., 14.2: Aerosolaustrittsrohr
- 15, 15.1, 15.2: Aerosolzufuhr
- 16: Absaugung
- A₁: Auftaukammer

## Patentansprüche

1. Verfahren zum Konditionieren eines Lebensmittels im Zusammenhang mit einer Bearbeitung, einer Verarbeitung oder seiner Herstellung in einer Luftumgebung in einem offenen Konditionierungsraum, durch den das Lebensmittel gefördert wird, **dadurch gekennzeichnet, dass**
a) auf das Lebensmittel bei dem Konditionierungsprozess Einfluss nehmende klimatische Daten während des Konditionierungsprozesses in der Umgebung des Lebensmittels innerhalb des Konditionierungsraumes erfasst werden, wobei als klimatische Daten die Konditionierungsgrößen Temperatur, absoluter Wassergehalt und Luftdruck als IST-Werte erfasst und mit Lebensmittel bezogenen SOLL-Werten für den Temperaturänderungsprozess verglichen werden, und
b) bei Feststellen einer Abweichung des IST-Wertes von dem diesen zugeordneten SOLL-Wert auf die Umgebung des Lebensmittels in dem Konditionierungsraum zum Anpassen des IST-Wertes an den SOLL-Wert Einfluss genommen wird, wobei zum Zwecke dieser Einflussnahme das Lebensmittel in dem Konditionierungsraum durch eine Luftströmung angeströmt wird und
(i) eine Einflussnahme in Bezug auf eine Anpassung der IST-Temperatur an die SOLL-Temperatur durch eine als Zustrom zugeführte Luftmenge und/oder die Temperatur des der zugeführten Luftströmung,
(ii) eine Einflussnahme in Bezug auf eine Anpassung des IST-Druckes an den SOLL-Druck durch die als Zustrom zugeführte Luftmenge und
(iii) eine Einflussnahme in Bezug auf eine Anpassung des absoluten IST-Wassergehaltes an den absoluten SOLL-Wassergehalt durch eine entsprechende Wasser-Aerosol-Beladung der zugeführten Luftströmung vorgenommen wird, in der die Aerosoltröpfchen als Schwebfracht in der Luftströmung mitgeführt werden und wobei das Aerosol ohne Wärmequelle generiert wird,
wobei aus dem Konditionierungsraum austretende Luft und Luftfeuchtigkeit durch den Zustrom und die Regelung der klimatischen Umgebung des Lebensmittels kompensiert wird, und wobei während des Konditionierungsprozesses in der Umgebung des zu konditionierenden Lebensmittels der CO₂-Gehalt und/oder der O₂-Gehalt in der Umgebungsatmosphäre erfasst und mit für den Konditionierungsprozess des Lebensmittels vorgesehenen SOLL-Werten verglichen wird und dass bei Feststellen einer Abweichung des IST-Wertes von dem SOLL-Wert die von außerhalb dem Konditionierungsraum zugeführte Luftmenge erhöht und/oder durch Herstellen einer Strömungsverbindung zwischen der Umgebung des Konditionierungsraumes und der Außenumgebung des Gebäudes, in dem sich der Konditionierungsraum befindet, die von der Außenumgebung zuströmende Luftmenge erhöht wird.

2. Verfahren nach Anspruch 1, **dadurch gekennzeichnet, dass** die SOLL-Wertbestimmung zumindest in Bezug auf den absoluten Wassergehalt als klimatische Konditionierungsgröße auf Basis der Wasseraktivität des Lebensmittels ermittelt wird.

3. Verfahren nach einem der Ansprüche 1 oder 2, **dadurch gekennzeichnet, dass** die Konditionierung des Lebensmittels in mehreren Konditionierungsstufen durchgeführt wird, wobei die Konditionsstufen sich in Bezug auf die IST-Temperatur des Lebensmittels unterscheiden und die Konditionierungen sich in den einzelnen Konditionierungsstufen in zumindest einer weiteren Konditionierungsgröße unterscheiden.

4. Verfahren nach Anspruch 3, **dadurch gekennzeichnet, dass** zum Konditionieren des Lebensmittels in zumindest einer Konditionierungsstufe mit dem Wasser-Aerosol antimikrobielle und/oder antifungale Stoffe dem Lebensmittel zugeführt werden.

5. Verfahren nach einem der Ansprüche 1 bis 4, **dadurch gekennzeichnet, dass** auf das Lebensmittel bei dem Konditionierungsprozess Einfluss nehmende klimatische Daten außerhalb des Konditionierungsraumes erfasst werden, wobei als klimatische Daten zumindest eine der klimatischen Größen: Temperatur, absoluter Wassergehalt oder Luftdruck als IST-Außenwerte erfasst und mit dem jeweiligen Lebensmittel bezogenen SOLL-Wert sowie der Differenz des Lebensmittel bezogenen SOLL-Wertes und dem innerhalb des Konditionierungsraums erfassten IST-Wert verglichen wird, und dass bei Feststellen einer Abweichung zwischen einem außerhalb des Konditionierungsraumes erfassten IST-Außenwert und dem Lebensmittel bezogenen SOLL-Wert in Abhängigkeit von der Reaktionsträgheit, ob und inwieweit eine Änderung des IST-Außenwertes zu einer Änderung des IST-Wertes innerhalb des Konditionierungsraums führt, der Konditionierungsprozess an den sich ändernden Sollwertsprung angepasst wird.

6. Verfahren nach Anspruch 5, **dadurch gekennzeichnet, dass** die außerhalb des Konditionierungsraumes erfassten Daten klimatische Daten der Außenumgebung des Gebäudes sind, in dem sich der Konditionierungsraum befindet.

7. Verfahren nach Anspruch 5 oder 6, **dadurch gekennzeichnet, dass** in die Anpassung des Konditionierungsprozesses klimatische Vorhersagen einfließen, die in Ergänzung zu dem oder den außerhalb des Konditionierungsraumes gewonnenen Werten in die Anpassung der Konditionierung einfließen.

8. Verfahren nach einem der Ansprüche 1 bis 7, **dadurch gekennzeichnet, dass** das Verfahren im Zusammenhang mit dem Abkühlen von Backwaren nach ihrer Entnahme aus einem Ofen durchgeführt wird.

9. Verfahren nach einem der Ansprüche 1 bis 8, **dadurch gekennzeichnet, dass** das Verfahren im Zusammenhang mit dem Auftauen von tiefgekühlten Lebensmitteln durchgeführt wird.

## Claims

1. Method for conditioning a food in connection with a treatment, a processing, or its production in an air environment in an open conditioning space, through which the food is conveyed, **characterised in that**
a) climatic data influencing the food during the conditioning process are captured during the conditioning process in the surroundings of the food within the conditioning space, wherein, as climatic data, the conditioning variables of temperature, absolute water content and air pressure are captured as ACTUAL values and are compared with food-related SETPOINT values for the temperature change process, and
b) if a deviation is detected of the ACTUAL value from the SETPOINT value associated with it, the surroundings of the food in the conditioning space are influenced in order to adjust the ACTUAL value to the SETPOINT value, wherein, for the purpose of this influencing, an air flow is applied to the food in the conditioning space, and
(i) influencing is performed in relation to an adjustment of the ACTUAL temperature to the SETPOINT temperature by means of the supplied air amount and/or the temperature of the supplied air amount,
(ii) influencing is performed with respect to an adjustment of the ACTUAL pressure to the SETPOINT pressure by means of the supplied air amount, and
(iii) influencing is performed with respect to an adjustment of the absolute ACTUAL water content to the absolute SETPOINT water content by means of a corresponding aerosol load of the air flow, in which the aerosol droplets are carried as a suspended load in the air flow, and wherein the aerosol is generated without a heat source, wherein, air emerging from the conditioning space and air humidity are compensated by the inflow and regulating of the climatic surroundings of the food, and wherein, during the conditioning process, in the surroundings of the food which is to be conditioned the CO₂ content and/or the O₂ content in the surrounding atmosphere are captured, and compared with the SETPOINT values specified for the conditioning process of the food, and that, in the event of a deviation being detected of the ACTUAL value from the SETPOINT value, the air quantity being supplied from outside the conditioning space is increased, and/or, by creating a flow connection between the surroundings of the conditioning space and the exterior environment of the building in which the conditioning space is located, the air amount flowing in from the exterior environment is increased.

2. Method according to claim 1, **characterised in that** the SETPOINT value determination is acquired at least in relation to the absolute water content as a climatic conditioning value on the basis of the water activity of the food.

3. Method according to claim 1 or 2, **characterised in that** the conditioning of the food is carried out in several conditioning steps, wherein the conditioning steps differ in relation to the ACTUAL temperature of the food, and the conditioning processes in the individual conditioning steps differ in at least one further conditioning value.

4. Method according to claim 3, **characterised in that,** for the conditioning of the food, in at least one conditioning step antimicrobial and/or antifungal substances are conveyed to the food with the water-aerosol.

5. Method according to any one of claims 1 to 4, **characterised in that** the climatic data influencing the food during the conditioning process are captured outside the conditioning space, wherein, as climatic data, at least one of the climatic values is captured: temperature, absolute water content, or air pressure as ACTUAL outside values, and is compared with the respective SETPOINT value related to the food, and the difference between the SETPOINT value related to the food and the ACTUAL value captured inside the conditioning space is compared, and that, in the event of a deviation being determined between an ACTUAL outside value captured outside the conditioning space and the SETPOINT value related to the food, then, as a dependency of the reaction inertia, and whether and to what extent a change in the ACTUAL outside value leads to a change in the ACTUAL value inside the conditioning space, the conditioning process is adjusted to the changing setpoint value shift.

6. Method according to claim 5, **characterised in that** the data captured outside the conditioning space are climatic data of the external environment of the building in which the conditioning space is located.

7. Method according to claim 5 or 6, **characterised in that** climatic prognostications are introduced into the adjustment of the conditioning process, which are then introduced into the adjustment of the conditioning as a supplement to the value or values acquired outside the conditioning space.

8. Method according to any one of claims 1 to 7, **characterised in that** the method is carried out in connection with the cooling of baked goods after their removal from an oven.

9. Method according to any one of claims 1 to 8, **characterised in that** the method is carried out in connection with the thawing out of deep-frozen foodstuffs.

## Revendications

1. Procédé de conditionnement d'un produit alimentaire dans le cadre d'un traitement, d'une transformation ou de sa fabrication dans un environnement d'air, dans une salle de conditionnement ouverte à travers laquelle le produit alimentaire est convoyé, **caractérisé en que**
a) les données climatiques, dont l'influence s'exerce sur le produit alimentaire à l'occasion du processus de conditionnement, sont saisies pendant le processus de conditionnement, dans l'environnement du produit alimentaire, à l'intérieur de la salle de conditionnement ; les grandeurs de conditionnement étant les données climatiques que sont la température, le taux d'humidité absolue et la pression atmosphérique, lesquelles sont saisies en tant que valeurs REELLES et comparées à des valeurs DE CONSIGNE applicables au produit alimentaire au cours du processus de modification de la température et que
b) si une divergence entre la valeur REELLE et la valeur de CONSIGNE applicable à ce produit alimentaire est constatée, une influence est exercée sur l'environnement de celui-ci dans la salle de conditionnement, afin d'adapter la valeur REELLE à la valeur de CONSIGNE ; un flux d'air étant dirigé sur le produit alimentaire dans la salle de conditionnement afin d'exercer cette influence et
(i) une influence étant exercée de façon à ajuster la température REELLE à la température de CONSIGNE à travers une quantité d'air acheminée en tant que flux d'arrivée et/ou à travers la température du flux d'air acheminé,
(ii) une influence étant exercée de façon à ajuster la pression REELLE à la pression de CONSIGNE à travers la quantité d'air acheminée en tant que flux d'arrivée et
(iii) une influence étant exercée de façon à ajuster la teneur absolue REELLE en eau à la teneur absolue de CONSIGNE en eau en procédant à une charge adéquate d'eau en aérosol dans le flux d'air acheminé, lequel emporte les gouttes d'aérosol transportées en suspension dans le flux d'air et l'aérosol étant généré sans source de chaleur,
l'air sortant et l'humidité de l'air de la salle de conditionnement étant compensés par le flux entrant et la régulation de l'environnement climatique du produit alimentaire, et la teneur en CO2 dans l'environnement du produit alimentaire à conditionner et/ou la teneur en O2 dans l'atmosphère de l'environnement étant saisies pendant le processus de conditionnement et comparées aux valeurs de CONSIGNE prévues pour le processus de conditionnement du produit alimentaire et qu'en cas de constatation d'une divergence entre ma valeur REELLE et la valeur de CONSIGNE, la quantité d'air acheminée depuis l'extérieur de la salle de conditionnement est augmentée et/ou la quantité d'air acheminée depuis l'environnement extérieur est augmentée en réalisant une combinaison de flux entre l'environnement de la salle de conditionnement et l'environnement extérieur du bâtiment dans lequel se trouve la salle de conditionnement.

2. Procédé selon la revendication 1, **caractérisé en ce que** la définition de la valeur de CONSIGNE est déterminée en se référant au moins à la teneur absolue en eau en tant que grandeur climatique de conditionnement sur la base de l'activité de l'eau du produit alimentaire.

3. Procédé selon l'une des revendications 1 ou 2, **caractérisé en ce que** le conditionnement du produit alimentaire est réalisé en plusieurs étapes de conditionnement, les étapes de conditionnement se différenciant par la température REELLE du produit alimentaire et que les conditionnements se différencient à chacune des étapes de conditionnement par au moins une grandeur de conditionnement supplémentaire.

4. Procédé selon la revendication 3, **caractérisé en ce que** pour conditionner le produit alimentaire, des substances anti-fongiques et/ou antimicrobiennes sont acheminées vers le produit alimentaire avec l'aérosol d'eau au cours d'au moins une étape de conditionnement.

5. Procédé selon l'une des revendications 1 à 4, **caractérisé en ce que** des données climatiques, exerçant une influence sur le produit alimentaire lors du processus de conditionnement, sont saisies en dehors de la salle de conditionnement, lesquelles données climatiques sont au moins une des grandeurs climatiques : température, teneur absolue en eau ou pression atmosphérique lesquelles sont saisies en tant que valeurs extérieures REELLES et comparées aux valeurs de CONSIGNE valables pour chaque produit alimentaire, ainsi qu'à la différence entre la valeur de CONSIGNE valable pour ledit produit alimentaire et la valeur REELLE à l'intérieur de la salle de conditionnement, et **en ce que**, si une divergence est constatée entre la valeur REELLE extérieure, saisie à l'extérieur de la salle de conditionnement, et la valeur de CONSIGNE valable pour ledit produit alimentaire, le processus de conditionnement est ajusté en fonction de l'inertie de la réaction, laquelle définit si et dans quelle mesure, une modification de la valeur de CONSIGNE extérieure entraîne une modification de la valeur REELLE à l'intérieur de la salle de conditionnement, afin de s'adapter au saut de valeur de consigne qui se modifie.

6. Procédé selon la revendication 5, **caractérisé en ce que** les données saisies en dehors de la salle de conditionnement sont des données climatiques de l'environnement extérieur du bâtiment dans lequel se trouve la salle de conditionnement.

7. Procédé selon la revendication 5 ou 6, **caractérisé en ce que** des prévisions climatiques sont intégrées pour réaliser l'ajustement du processus de conditionnement, lesquelles viennent compléter la ou les valeurs recueillies à l'extérieur de la salle de conditionnement pour réaliser l'ajustement du conditionnement.

8. Procédé selon l'une des revendications 1 à 7, **caractérisé en ce que** le procédé est réalisé dans le cadre du refroidissement de produits cuits au four, après leur sortie d'un four.

9. Procédé selon l'une des revendications 1 à 8, **caractérisé en ce que** le procédé est réalisé dans le cadre de la décongélation de produits alimentaires surgelés.
